(19) Europäisches Patentamt
European Patent Office
Office européen des brevets

(11) EP 0 743 745 B1

(12) **EUROPEAN PATENT SPECIFICATION**

(45) Date of publication and mention of the grant of the patent:
**30.07.2003 Bulletin 2003/31**

(51) Int Cl.$^7$: **H02P 21/00**

(21) Application number: **96303382.4**

(22) Date of filing: **14.05.1996**

(54) **Controlling apparatus for induction motor**

Steuereinrichtung für Induktionsmaschine

Dispositif de pilotage d'un moteur à induction

(84) Designated Contracting States:
**DE FR IT**

(30) Priority: **19.05.1995 JP 12109295**

(43) Date of publication of application:
**20.11.1996 Bulletin 1996/47**

(73) Proprietor: **Hitachi, Ltd.**
**Chiyoda-ku, Tokyo 101 (JP)**

(72) Inventors:
- **Ishida, Seiji**
  **Funabashi-shi, Chiba 274 (JP)**
- **Okuyama, Toshiaki**
  **Naka-gun, Ibaraki 319-11 (JP)**
- **Tobari, Kazuaki**
  **Hitachioota-shi, Ibaraki 313 (JP)**
- **Oohashi, Hironori**
  **Funabashi-shi, Chiba 274 (JP)**
- **Tomita, Hiroyuki**
  **Funabashi-shi, Chiba 274 (JP)**
- **Fuji, Hiroshi**
  **Hanamigawa-ku, Chiba 262 (JP)**

(74) Representative: **Calderbank, Thomas Roger et al**
**MEWBURN ELLIS**
**York House**
**23 Kingsway**
**London WC2B 6HP (GB)**

(56) References cited:
**EP-A- 0 233 948** **EP-A- 0 598 921**
**FR-A- 2 438 372**

- **32ND MIDWEST SYMPOSIUM ON CIRCUITS AND SYSTEMS, 14 - 16 August 1989, CHAMPAIGN, ILLINOIS, pages 766-770, XP000139765 ISLAM ET AL.: "FOUR QUADRANT ROBUST QUICK RESPONSE OPTIMALLY EFFICIENT INVERTER FED INDUCTION MOTOR DRIVE"**
- **PATENT ABSTRACTS OF JAPAN vol. 8, no. 95 (E-242), 2 May 1984 & JP-A-59 014385 (FUJITSU FANUC), 25 January 1984,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 743 745 B1

Printed by Jouve, 75001 PARIS (FR)

## Description

The present invention relates to a controlling apparatus for an induction motor and, more particularly, to an induction motor controlling apparatus that stably controls an induction motor also in a regenerative operation in which the induction motor is operated at synchronous speed or higher.

As a controlling method of an induction motor controlling apparatus for controlling an induction motor at variable speed, V/f control (voltage/velocity constant control) is known. In this method, variable-speed control can be performed on an induction motor by a simple constitution. However, at low speed, the flux inside the induction motor becomes small due to influences such as a voltage drop by primary resistance, thereby reducing an output torque. A method to improve the torque characteristic at low speed, is disclosed in Japanese Patent Laid-Open No. Hei 6-225574 (1994).

Fig. 3 shows an example of prior art. In the figure, a controlling apparatus comprises a power supply 1, a power converter 2 for performing power conversion based on 3-phase voltage references Vu, Vv and Vw, an induction motor 3 which is an object of the control, a current component detector 4 for detecting an excitation current Id and a torque current Iq from currents Iu and Iv flowing through the induction motor 3, a frequency controller 16 for outputting a reference angular frequency ω from the torque current Iq detected by the current component detector 4 and a reference angular velocity ω r*, a voltage controller 5 for outputting a d-axis voltage reference Vd and a q-axis voltage reference Vq from the excitation current Id, the torque current Iq, and the reference angular frequency ω, an integrator 11 for integrating the reference angular frequency ω to output a phase θ, and a 2-phase-to-3-phase rotational coordinate transformer 15 for performing 2-phase-to-3-phase transformation on the d-axis voltage reference Vd and the q-axis voltage reference Vq based on the phase θ to output the 3-phase voltage references Vu, Vv and Vw.

The frequency controller 16 estimates a slip of the induction motor from the torque current and controls the reference angular frequency ω by adding the reference angular velocity ω r*, thereby coinciding with an actual rotational angular velocity ω r with the reference angular velocity ω r*.

The voltage controller 5 comprises an adder 13 for obtaining a deviation between an excitation current reference Id* and the excitation current Id, a controller 12 for controlling a voltage correction amount Δ V such that this deviation becomes zero, and a voltage vector arithmetic unit 14 for obtaining a voltage reference based on equation 1 below and, by using the voltage correction amount Δ V, obtaining the d-axis voltage reference Vd and the q-axis voltage reference Vq from equation 2 below to output the results.

$$\begin{pmatrix} Vd \\ Vq \end{pmatrix} = \begin{pmatrix} R1 & -\omega \cdot L\sigma \\ \omega \cdot L1 & R1 \end{pmatrix} \begin{pmatrix} Id^* \\ Iq \end{pmatrix} \quad \cdots (1)$$

In the equation 1 above, R1 is a primary resister of the induction motor, L σ is a leak inductance of primary conversion of the induction motor (L σ = (L1·L2 - M·M)/L2, L1 is a primary self inductance of the induction motor, L2 is a secondary self inductance of the induction motor, and M is a mutual inductance of the induction motor.

$$\begin{pmatrix} Vd \\ Vq \end{pmatrix} = \begin{pmatrix} R1 & -\omega \cdot L\sigma \\ \omega \cdot L1 & R1 \end{pmatrix} \begin{pmatrix} Id^* \\ Iq \end{pmatrix} + \begin{pmatrix} 1 \\ K2 \end{pmatrix} \Delta V \quad \cdots (2)$$

Where, K2 is a gain for determining a correction amount of Vq for Vd.

A state equation of the induction motor in a coordinates system rotating at the angular velocity ω is expressed in equation 3.

$$\begin{pmatrix} Vq \\ Vq \\ 0 \\ 0 \end{pmatrix} = \begin{pmatrix} R1+R2'+s \cdot L\sigma & -\omega \cdot L\sigma & -R2'/M & -\omega r \cdot M/L2 \\ \omega \cdot L\sigma & R1+R2'+s \cdot L\sigma & \omega r \cdot M/L2 & -R2'/M \\ -R2 \cdot M/L2 & 0 & R2/L2^{+s} & -\omega s \\ 0 & -R2 \cdot W/L2 & \omega s & R2/L2^{+s} \end{pmatrix} \begin{pmatrix} Id \\ Iq \\ \phi d \\ \phi q \end{pmatrix} \quad \cdots (3)$$

In the equation 3, R2 is a secondary resistance . of the induction motor, $\omega$ r is a rotational angular velocity of the induction motor, $\omega$ s is a slip angular frequency of the induction motor, s is a differential operator, $\phi$ d is a d-axis flux of the induction motor, and $\phi$ q is a q-axis flux of the induction motor. R2' is a primarily converted secondary resistance of the induction motor, which is expressed in equation 4 below.

$$R2' = (M/L2)^2 \cdot R2 \tag{4}$$

When the d-axis flux $\phi$ d and the q-axis flux $\phi$ q are solved in a steady state (s = 0) with the equation 1 substituted in the equation 3,equations 5 and 6 are derived,since the excitation current Id coinsides with the excitation current reference Id* (Id = Id*).

$$\phi\ d = M \cdot Id^* \tag{5}$$

$$\phi\ d = 0 \tag{6}$$

From the equations 5 and 6, it is known that constant flux magnitude and matching of the flux with the d-axis are obtained without being dependent on the reference angular frequency $\omega$ and load. This indicates that an output torque will not be reduced at low speed. Further, since a slip is given by equation 7, the slip can be estimated from the torque current Iq.

$$\omega s = \frac{R2}{L2 \cdot Id^*} I\ q \tag{7}$$

On the other hand, the voltage correction amount . $\Delta$ V eliminates the effects of a voltage error in the power converter 2 and errors of constants in the voltage controller 5 and the induction motor 3 by making zero the deviation between the excitation current reference and the excitation current.

In the above-mentioned control method, however, a sufficient torque may not be obtained when the induction motor is rotating at speed over the synchronous speed, namely, in regenerative running.

In the following, operation in case of the forward drive in which the rotational angular velocity $\omega$ r is positive are described for reverse rotation in which the rotational angular velocity $\omega$ r is negative, the signs of the slip angular frequency $\omega$ s, torque current Iq, torque T, and q-axis flux $\phi$ q are only inverted.

Fig. 4 shows a block diagram which is equivalent to the equation 3. Gain G at the DC current in an open loop which is obtained by cutting the loop a at point A is given by equation 8.

$$G = -\omega s \cdot \frac{L2}{R2} \cdot \omega r \cdot \frac{M}{L2} \cdot \frac{1}{R1 + R2'} \cdot \frac{R2 \cdot M}{L2} \cdot \frac{L2}{R2}$$
$$= -\omega s \cdot \omega r \cdot \frac{M^2}{R2(R1 + R2')} \quad \cdots (8)$$

When the induction motor is rotating at speed lower than the synchronous speed, namely in power running, the signs of the slip angular frequency $\omega$ s and the rotational angular velocity $\omega$ r coincide, so that the gain G becomes a negative value. In the regenerative running, the signs of the slip angular frequency $\omega$ s and the rotational angular velocity $\omega$ r are different from each other, so that the gain G becomes a positive value. As the absolute value of the slip angular frequency $\omega$ s increases moreover, the gain G also increases. As generally known, when a gain in an open loop is smaller than one, the loop converges; when it is larger than one, the loop diverges. That is, as the absolute value of the slip angular frequency $\omega$ s increases in the regenerative running, the q-axis flux $\phi$ q will diverge.

Fig. 5 shows a part of the block diagram equivalent to the equation 3. From the relationship b shown in Fig. 5, as the absolute value of the slip angular frequency $\omega$ s increases in the regenerative running, the q-axis flux $\phi$ q which is intrinsically zero temporarily increases in the positive direction because the d-axis flux is positive. When the absolute value of the slip is large, the diversion occurs as described above so that the absolute value of the q-axis flux $\phi$ q increases. On the other hand, since the slip angular frequency $\omega$ s is negative in the regenerative running, the d-

axis flux $\phi$ d decreases from the relationship c shown in Fig. 5.

The torque T of the induction motor is obtained from equation 9.

$$T= \frac{3P}{4} \cdot \frac{M}{L2} (\phi d \cdot Iq - \phi q \cdot Id) \quad (9)$$

In the above equation, P indicates the number of poles of the induction motor. When the q-axis flux $\phi$ q increases and the d-axis flux $\phi$ d decreases, in the regenerative running the d-axis current Id becomes a positive value and the absolute value of the torque decreases because the q-axis current is a negative value. Fig. 6 shows a temporal variation of the d-axis flux $\varphi$ d and the q-axis flux $\varphi$ q at that time.

In the above description, the forward running of the induction motor has been explained. It is apparent that the absolute value of the torque also decreases in the reverse rotation.

EP-A-0598921 discloses a controlling apparatus for a three-phone induction motor which detects a torque current orthogonal to the flux of the including motor from the detected value of the current, uses a voltage reference to calculate the output voltage, and detects power running and regeneration of the motor. Thus this document corresponds to the pre-characterising part of claim 1. In EP-A-0598921, the detection of a generation is on the basis of current.

FR-A-2438372 also discloses a control separation for an induction motor on which the motor is forced to operated on a predetermined torque versus slip frequency characteristic.

According to a first aspect of the present invention there is provided a controlling apparatus for an induction motor for controlling said induction motor by controlling an output angular frequency and an output voltage based on a reference angular velocity ($\omega r^*$), comprising:

a current component detector for detecting a torque current orthogonal to the flux of said induction motor from a detected value of current of said induction motor;
a frequency controller for calculating a reference angular frequency ($\omega$) using said reference angular velocity ($\omega r^*$)
a voltage controller for calculating said output voltage using said reference angular frequency ($\omega$); and
a regeneration determination section for detecting power running and regeneration of said induction motor;

wherein:

the regeneration determination section is arranged to detect based on the torque current form the current component detector and said reference angular frequency ($\omega$);

and the apparatus further comprises:

an angular frequency correcting section for adding an amount proportioned to the torque current output from said current component detector to said reference angular frequency ($\omega$) only when said regeneration determining section determines a regenerative state, the result of such addition being used as the output angular frequency.

According to a second aspect of the present invention there is provided a controlling apparatus for an induction motor for controlling said induction motor by controlling an output angular frequency and an output voltage based on a reference angular velocity ($\omega r^*$), comprising:

a current component detector for detecting a torque current orthogonal to the flux of said induction motor from a detected value of current of said induction motor;
a frequency controller for calculating a reference angular frequency ($\omega$) using said reference angular velocity ($\omega r^*$)
a voltage controller for calculating said output voltage using said reference angular frequency; and
a regeneration determination section for detecting power running and regeneration of said induction motor;

wherein:

the regeneration determination section is arranged to detect based on the torque current from the current component detector and the reference angular frequency ($\omega$);

and the apparatus further comprises:

a correction amount arithmetic unit for selecting a correction amount due to a voltage drop due to a primary using

said correction amount in its calculation of said output voltage.

The present invention thus may provide a controlling apparatus for an induction motor which prevents an induction motor torque from getting lower in regenerative running to assure the output of enough torque in the regenerative running.

Thus, when at least one of a velocity and a voltage is corrected in regenerative running, the q-axis flux φ q decreases due to the above-mentioned dispersion because the value of the q-axis flux φ q is negative, while the d-axis flux φ d increases due to the relationship d of Fig. 5, thereby increasing the absolute value of the torque from the equation. Consequently, the setup prevents the torque from getting smaller.

In the drawings

Fig. 1 is a block diagram illustrating the induction motor controlling apparatus practiced as one embodiment of the present invention.
Fig. 2 is a block diagram illustrating the induction motor controlling apparatus practiced as another embodiment of the present invention.
Fig. 3 is a block diagram illustrating a prior-art of the induction motor controlling apparatus.
Fig. 4 is a block diagram illustrating induction motor operations.
Fig. 5 is a block diagram illustrating induction motor operations.
Fig. 6 is a diagram illustrating flux waveforms for describing induction motor operations.
Fig. 7 is a diagram illustrating flux waveforms for describing the principles of induction motor operations.
Fig. 8 is a block diagram illustrating the constitution of the regeneration determining section.
Fig. 9 is a graph indicating regeneration determining areas.
Fig. 10 is a graph indicating regeneration determining areas.
Fig. 11 is a graph indicating regeneration determining areas.
Fig. 12 is a block diagram illustrating the constitution of the velocity controller.

This invention will be described in further detail with reference to the drawings.The embodied controlling apparatuses for an induction motor will be described with reference to the related block diagrams; the controlling apparatuses can be comprised of a microprocessor.

Referring to Fig. 1, there is shown a block diagram illustrating one preferred embodiment of the present invention.The controlling apparatus of Fig. 1, differ from that of Fig. 3 in the point that, the input to the integrator 11 is not a reference angular frequency ω but a second reference angular frequency ω' which is the output from the frequency correcting section 10 for correcting the reference angular frequency ω. The frequency correcting section 10 of Fig. 1 comprises a regeneration determining section 6 for detecting based on a reference angular frequency ω and a torque current Iq that the induction motor is in a regenerative state, a correction amount output section 7 for outputting a correction amount proportional to the torque current Iq, a selector 9 for outputting the output of the correction amount output section only at regeneration based on the output of the regeneration determining section 6, and a subtracter 8 for subtracting the output of the selector 9 from the reference angular frequency ω.

Next, the operations to be performed by the above-mentioned controlling apparatus will be described. In power running, the same operations as those performed by the prior-art counterpart of Fig. 3 are performed. Therefore, in the following, only the operations to be performed in regenerative running will be described. In addition, only the case in which the rotational angular velocity ω r has a positive value, namely the induction motor is rotating forward will be described. When the rotational angular velocity ω r is negative, namely the induction motor is rotating reversely, the signs of the slip angular frequency ω s, torque current Iq, torque T, and q-axis flux ϕ q are only inverted.

According to the controlling apparatus of Fig.1, since the torque current Iq is negative at the regenerative running, there is a relationship ω < ω' where ω indicates the reference angular frequency used in the voltage controller 5 and ω' indicates a second reference angular frequency to be inputted in the integrator 11. This is equivalent to the state in which the slip angular frequency ω s has increased in the equation 10 derived from the third line of the equation 3.

$$\phi q = \frac{1}{1+(L2/R2)\cdot s}\,(M\cdot Iq - \omega s\cdot (L2/R2)\cdot \phi d) \qquad (10)$$

It will be apparent that, as the slip angular frequency ω s increases, the q-axis flux ϕ q which is zero for the controlling apparatus of Fig. 3 goes negative. Even in such a state,when the absolute value of slip is large the dispersion occurs as mentioned above, and the absolute value of the q-axis flux ϕ q increases. On the other hand, since the slip angular frequency ω s is negative at the regenerative running, the d-axis flux ϕ d increases due to the relationship c of Fig. 5 as mentioned above. When the q-axis flux ϕ q decreases and the d-axis flux ϕ d increases, the absolute value of the torque increases, due to the equation 9 for the torque and that at the regenerative running the d-axis current Id

is positive and the q-axis current is negative. Consequently, the torque shortage can be avoided.

Fig. 7 shows temporal variations of the d-axis flux ϕ d and the q-axis flux ϕ q.

In the about, the case of the forward derive is explained, In the reverse drive, only the signs of the slip angular frequency ω s, torque current Iq, torque T, and q-axis flux ϕ q are reversed and the same effect can be obtained as the foward drive.

Fig. 2 shows another embodiment of the present invention. The controlling apparatus of Fig. 2 differs from the prior art of Fig. 3 in that, for the primary resistance R1 of the induction motor for use in the voltage vector arithmetic unit 14, the corrected primary resistance , namely the output of a correction amount arithmetic unit 20, is used. The correction amount arithmetic unit 20 of Fig. 2 comprises a regeneration determining section 6 for detecting from the reference angular frequency ω and the torque current Iq that the induction motor is in a regenerative state, a selector 18 for outputting a primary resistance corrected value 17 only at regeneration based on the output of the regeneration determining section 6, and an adder 19 for adding a primary resistance setting value R1* to the output of the selector 18 to output the primary resistance R1 for use in the voltage vector arithmetic unit 14. Details of the regeneration determining section 6 will be described later.

The following describes the operations of the controlling apparatus of Fig. 2 mentioned above. In power running, the same operations as those performed by the prior art of Fig. 3 are performed. Therefore, only the operations to be performed in regenerative running will be described below. In addition, the case in which the rotational angular velocity ω r has a positive value, namely the induction motor is rotating forward will be described. When the rotational angular velocity ω r is negative, namely the induction motor is rotating reversely, the signs of the slip angular frequency ω s, torque current Iq, torque T, and q-axis flux ϕ q are inverted.

According to the controlling apparatus of Fig. 2, since the primary resistance R1 of the voltage controller 5 increases and, the torque current Iq is negative at the regenerative running < 0, the q-axis voltage reference Vq, namely the output of the voltage controller 5 decreases. Consequently, the torque current Iq decreases and the q-axis flux ϕ q which was 0 for the controlling apparatus of Fig. 3 goes negative from the equation 10. This results in the same operation as that of the controlling apparatus of Fig. 1, preventing the torque from getting insufficient.

In the above , the operation in the forward drive is decribed. In the reverse drive, only the signs of the slip angular frequency ω s, torque current Iq, torque T, and q-axis flux ϕ q are reversed to the same effect as mentioned above.

The regeneration determining section 6 of the above-mentioned embodiments of Figs. 1 and 2 can be implemented by a constitution of Fig. 8 for example. The regeneration determining section 6 of Fig. 8 comprises a velocity estimating section 100 for outputting an estimated rotational angular velocity ω re obtained from equation 11 below based on the reference angular frequency ω and the torque current Iq and a regeneration determining section 101 for determining regeneration from the estimated rotational angular velocity ω re and the torque current Iq.

$$\omega\ re = \omega - K3 \cdot Iq \qquad (11)$$

Where, K3 is a slip constant, and given by K3 = R2/(L2·Id*). The determining section 101 determines that the induction motor is in the regenerative state in the state of Fig. 9, namely when the sign of the estimated rotational angular velocity ω re and the sign of the torque current Iq are different from each other.

The regeneration determining section 6 may take another constitution to determin that the induction motor is in the regenerative state, in the state of Fig. 10, namely the state in which the sign of the reference angular frequency ω and the sign of the torque current Iq are different. This constitution is simpler than the above-mentioned constitutions.

Further, if the rotation frequency of the induction motor can be detected, the regeneration determining section 6 may have still another constitution to determin that the induction motor is in the regenerative state, in the state of Fig. 11, namely the state in which the sign of the detected rotational angular velocity ω r and the sign of the torque current Iq are different. In this case, the regenerative state can be detected more accurately than in the above-mentioned constitutions.

In the above-mentioned embodiments, the torque current Iq is used. If the velocity controller 16 has a constitution of Fig. 12 for example, control is made such that the torque current Iq coinsides with the torque current reference Iq*, so that, instead of the torque current Iq, the torque current reference Iq* may be used partially or totally in the voltage controller 5, the velocity correcting section 10, the correction amount arithmetic unit 20, and the velocity estimating section 100. The velocity controller 16 of Fig. 12 comprises a velocity estimating section 100 for calculating the estimated rotational angular velocity ω re according to the equation 11, a velocity controller 110 for controlling the torque current reference Iq* based on the deviation between the reference angular velocity ω r* and the estimated rotational angular velocity ω re such that the estimated angular velocity ω re coincides with the reference angular velocity ω r*, and a current controller 111 for controlling the reference angular frequency ω based on the deviation between the torque current reference Iq* and the torque current Iq such that the torque current Iq coinsides with the

torque current reference Iq*.

If only the torque current Iq is used for calculation in the voltage controller 5, the frequency correcting section 10, the correction amount arithmetic unit 20, and the velocity estimating section 100, any of the above-mentioned embodiments may have a constitution in which the reference angular frequency ty ω is given instead of the reference angular velocity ω r* by omitting the velocity reference section 16.

As mentioned above, according to the induction motor controlling apparatus of the present invention,the torque shortage at regenerative running.can be prevented.

## Claims

1. A controlling apparatus for an induction motor (3) for controlling said induction motor (3) by controlling an output angular frequency and an output voltage based on a reference angular velocity (ωr*), comprising:

   a current component detector (4) for detecting a torque current orthogonal to the flux of said induction motor (3) from a detected value of current of said induction motor;
   a frequency controller (16) for calculating a reference angular frequency (ω)using said reference angular velocity (ωr*)
   a voltage controller (14) for calculating said output voltage using said reference angular frequency (ω); and
   a regeneration determination section (6) for detecting power running and regeneration of said induction motor;

   **characterised in that**:

   the regeneration determination section (6) is arranged to detect based on the torque current from the current component detector (4) and said reference angular frequency (ω);
   and the apparatus further comprises:

   an angular frequency correcting section (7) for adding an amount proportioned to the torque current output from said current component detector (4) to said reference angular frequency (ω) only when said regeneration determining section (6) determines a regenerative state, the result of such addition being used as the output angular frequency.

2. A controlling apparatus for an induction motor (3) for controlling said induction motor (3) by controlling an output angular frequency and an output voltage based on a reference angular velocity (ωr*), comprising:

   a current component detector (4) for detecting a torque current orthogonal to the flux of said induction motor (3) from a detected value of current of said induction motor;
   a frequency controller (16) for calculating a reference angular frequency (ω)using said reference angular velocity (ωr*)
   a voltage controller (14) for calculating said output voltage using said reference angular frequency; and
   a regeneration determination section (6) for detecting power running and regeneration of said induction motor;

   **characterised in that**:

   the regeneration determination section (6) is arranged to detect based on the torque current from the current component detector (4) and the reference angular frequency (ω);
   and the apparatus further comprises:

   a correction amount arithmetic unit (17, 18, 19) for selecting a correction amount due to a voltage drop due to a primary resistance of said induction motor on the basis of the determination of a regenerative state by said regeneration determining section (6), the voltage controller (14) using said correction amount in its calculation of said output voltage.

3. A controlling apparatus according to claim 1 or claim 2, wherein said regeneration determining section is arranged to determine regeneration and power running from a sign of a value of the reference angular frequency (ω) and a sign of the torque current.

4. A controlling apparatus according to claim 1 or claim 2, wherein said regeneration determining section is arranged

to determine regeneration and power running from the reference angular velocity (ωr*) or an estimated angular velocity (ωr*) and a sign of the torque current.

5. A controlling apparatus according to any one of the preceding claims, wherein said frequency controller (16) is arranged to receive said torque current and use said torque current in the determination of said reference angular frequency (ω).

6. A controlling apparatus according to any one of claims 1 to 4, wherein said torque current is controlled to coincide with a torque current reference and wherein said frequency controller is arranged to use said torque current reference in the determination of said reference angular frequency (ω).

7. A controlling apparatus according to claim 6, wherein said torque current reference is used by at least one of said regeneration determining section (6), said velocity correcting section and said voltage controller (14).

## Patentansprüche

1. Steuervorrichtung für einen Asynchronmotor (3) zum Steuern des Asynchronmotors (3) durch Regeln einer Ausgangswinkelfrequenz und einer Ausgangsspannung aufgrund einer Referenzwinkelgeschwindigkeit (ωr*) mit

einem Stromkomponentendetektor (4) zum Erfassen eines zum Fluß des Asynchronmotors (3) senkrechten Drehmomentstroms aus einem Meßwert des Motorstroms,
einem Frequenzregler (16) zum Berechnen einer Referenzwinkelfrequenz (ω) unter Verwendung der Referenzwinkelgeschwindigkeit (ωr*),
einem Spannungsregler (14) zum Berechnen der Ausgangsspannung unter Verwendung der Referenzwinkelfrequenz (ω) und
einem Rückgewinnungs-Bestimmungsteil (6) zur Ermittlung von Leistungsbetrieb und Nutzbremsung des Asynchronmotors,

**dadurch gekennzeichnet,**

**daß** der Rückgewinnungs-Bestimmungsteil (6) so ausgelegt ist, daß er den Betrieb aufgrund des Drehmomentstroms aus dem Stromkomponentendetektor (4) und der Referenzwinkelfrequenz (ω) ermittelt und **daß** die Vorrichtung ferner einen Winkelfrequenz-Korrekturteil (7) aufweist, der zu der Referenzwinkelfrequenz (ω) einen zum Drehmomentstromausgang des Stromkomponentendetektors (4) proportionalen Wert nur dann hinzuaddiert, wenn der Rückgewinnungs-Bestimmungsteil (6) einen Rückgewinnungsbetrieb feststellt, wobei das Additionsergebnis als Ausgangswinkelfrequenz verwendet wird.

2. Steuervorrichtung für einen Asynchronmotor (3) zum Steuern des Asynchronmotors (3) durch Regeln einer Ausgangswinkelfrequenz und einer Ausgangsspannung aufgrund einer Referenzwinkelgeschwindigkeit (ωr*) mit

einem Stromkomponentendetektor (4) zum Erfassen eines zum Fluß des Asynchronmotors (3) senkrechten Drehmomentstroms aus einem Meßwert des Motorstroms,
einem Frequenzregler (16) zum Berechnen einer Referenzwinkelfrequenz (ω) unter Verwendung der Referenzwinkelgeschwindigkeit (ωr*),
einem Spannungsregler (14) zum Berechnen der Ausgangsspannung unter Verwendung der Referenzwinkelfrequenz (ω) und
einem Rückgewinnungs-Bestimmungsteil (6) zur Ermittlung von Leistungsbetrieb und Nutzbremsung des Asynchronmotors,

**dadurch gekennzeichnet,**

**daß** der Rückgewinnungs-Bestimmungsteil (6) so ausgelegt ist, daß er den Betrieb aufgrund des Drehmomentstroms aus dem Stromkomponentendetektor (4) und der Referenzwinkelfrequenz (ω) ermittelt und **daß** die Vorrichtung ferner eine Korrekturbetrag-Recheneinheit (17, 18, 19) aufweist, die einen Korrekturbetrag entsprechend einem durch einen Primärwiderstand des Asynchronmotors verursachten Spannungsabfall aufgrund der Bestimmung eines Rückgewinnungsbetriebs durch den Rückgewinnungs-Bestimmungsteil (6) auswählt, wobei der Spannungsregler (14) diesen Korrekturbetrag bei seiner Berechnung der Ausgangsspannung verwendet.

3. Steuervorrichtung nach Anspruch 1 oder 2, wobei der Rückgewinnungs-Bestimmungsteil so ausgelegt ist, daß er Nutzbremsung und Leistungsbetrieb aus dem Vorzeichen des Referenzwinkelfrequenzwertes (ω) und dem Vorzeichen des Drehmomentstroms ermittelt.

4. Steuervorrichtung nach Anspruch l oder 2, wobei der Rückgewinnungs-Bestimmungsteil so ausgelegt ist, daß er Nutzbremsung und Leistungsbetrieb aus der Referenzwinkelgeschwindigkeit (ωr*) oder einer geschätzten Winkelgeschwindigkeit (ωr*) und dem Vorzeichen des Drehmomentstroms ermittelt.

5. Steuervorrichtung nach einem der vorhergehenden Ansprüche, wobei der Frequenzregler (16) so ausgelegt ist, daß er den Drehmomentstrom erhält und bei der Bestimmung der Referenzwinkelfrequenz (ω) verwendet.

6. Steuervorrichtung nach einem der Ansprüche 1 bis 4, wobei der Drehmomentstrom so geregelt ist, daß er mit einem Referenzdrehmomentstrom zusammenfällt, und wobei der Frequenzregler so ausgelegt ist, daß er den Referenzdrehmomentstrom bei der Bestimmung der Referenzwinkelfrequenz (ω) verwendet.

7. Steuervorrichtung nach Anspruch 6, wobei der Referenzdrehmomentstrom von dem Rückgewinnungs-Bestimmungsteil (6) und/oder dem Geschwindigkeitskorrekturteil und/ oder dem Spannungsregler (14) verwendet wird.

## Revendications

1. Dispositif de commande pour un moteur à induction (3) pour commander ledit moteur à induction (3) en commandant une fréquence angulaire de sortie et une tension de sortie en se basant sur une vitesse angulaire de référence (ωr*), comportant :

un détecteur de composante de courant (4) pour détecter un courant de couple orthogonal au flux dudit moteur à induction (3) à partir d'une valeur détectée de courant dudit moteur à induction,
une commande de fréquence (16) pour calculer une fréquence angulaire de référence (ω) en utilisant ladite vitesse angulaire de référence (ωr*),
une commande de tension (14) pour calculer ladite tension de sortie en utilisant ladite fréquence angulaire de référence (ω), et
une section de détermination de régénération (6) pour détecter un fonctionnement moteur et une régénération dudit moteur à induction,

**caractérisé en ce que** :

la section de détermination de régénération (6) est conçue pour effectuer une détections sur la base du courant de couple provenant du détecteur de composante de courant (4) et de ladite fréquence angulaire de référence (ω),
et le dispositif comporte de plus :

une section de correction de fréquence angulaire (7) pour ajouter une quantité proportionnelle au courant de couple délivré en sortie par ledit détecteur de composante de courant (4) à ladite fréquence angulaire de référence (ω) uniquement lorsque ladite section de détermination de régénération (6) détermine un état de régénération, le résultat d'uns telle addition étant utilisé en tant que fréquence angulaire de sortie.

2. Dispositif de commande pour un moteur à induction (3) pour commander ledit moteur à induction (3) en commandant une fréquence angulaire de sortie et une tension de sortie en se basant sur une vitesse angulaire de référence (ωr*), comportant :

un détecteur de composante de courant (4) pour détecter un courant de couple orthogonal au flux dudit moteur à induction (3) à partir d'une valeur détectée de courant dudit moteur à induction,
une commande de fréquence (16) pour calculer une fréquence angulaire de référence (ω) en utilisant ladite vitesse angulaire de référence (ωr*),
une commande de tension (14) pour calculer ladite tension de sortie en utilisant ladite fréquence angulaire de référence, et
une section de détermination de régénération (6) pour détecter un fonctionnement moteur et une régénération dudit moteur à induction,

**caractérisé en ce que** :

la section de détermination de régénération (6) est conçue pour effectuer une détection sur la base du courant de couple provenant du détecteur de composante de courant (4) et de la fréquence angulaire de référence (ω), et le dispositif comporte de plus :

une unité arithmétique de quantité de correction (17, 18, 19) pour sélectionner une quantité de correction due à une chute de tension du fait d'uns résistance primaire dudit moteur à induction sur la base de la détermination d'un état de régénération par ladite section de détermination de régénération (6), la commande de tension (14) utilisant ladite quantité de correction dans son calcul de ladite tension de sortie.

**3.** Dispositif de commande selon la revendication 1 ou 2, dans lequel ladite section de détermination de régénération est conçue pour déterminer une régénération et un fonctionnement moteur à partir d'un signe d'une valeur de la fréquence angulaire de référence (ω) et d'un signe du courant de couple.

**4.** Dispositif de commande selon la revendication 1 ou 2, dans lequel ladite section de détermination de régénération est conçue pour déterminer une régénération et un fonctionnement moteur à partir de la vitesse angulaire de référence (ωr*) ou d'une vitesse angulaire estimée (ωr*) et d'un signe du courant de couple.

**5.** Dispositif de commande selon l'uns quelconque des revendications précédentes, dans lequel ladite commande de fréquence (16) est conçue pour recevoir ledit courant de couple et utiliser ledit courant de couple dans la détermination de ladite fréquence angulaire de référence (ω).

**6.** Dispositif de commande selon l'uns quelconque des revendications 1 à 4, dans lequel ledit courant de couple est commandé pour coïncider avec une référence de courant de couple et dans lequel ladite commande de fréquence est conçue pour utiliser ladite référence de courant de couple dans la détermination de ladite fréquence angulaire de référence (ω).

**7.** Dispositif de commande selon la revendication 6, dans lequel ladite référence de courant de couple est utilisée par au moins l'une parmi ladite section de détermination de régénération (6), ladite section de correction de vitesse et ladite commande de tension (14).

FIG. 1

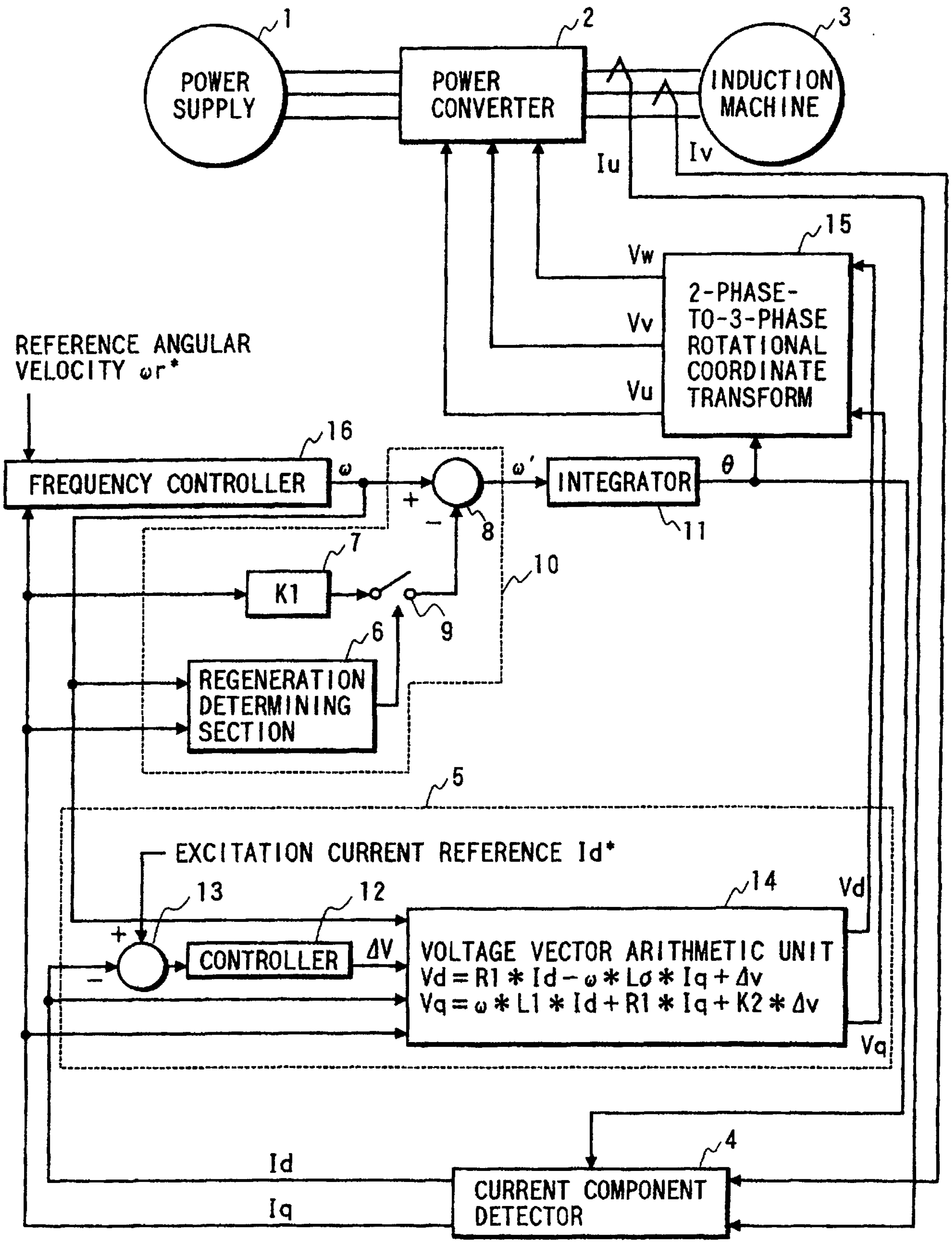
POWER SUPPLY
POWER CONVERTER
INDUCTION MACHINE
Iu
Iv
Vw
Vv
Vu
2-PHASE-TO-3-PHASE ROTATIONAL COORDINATE TRANSFORM
REFERENCE ANGULAR VELOCITY ωr*
FREQUENCY CONTROLLER
ω
ω'
INTEGRATOR
θ
K1
REGENERATION DETERMINING SECTION
EXCITATION CURRENT REFERENCE Id*
CONTROLLER
ΔV
VOLTAGE VECTOR ARITHMETIC UNIT
Vd = R1 * Id − ω * Lσ * Iq + Δv
Vq = ω * L1 * Id + R1 * Iq + K2 * Δv
Vd
Vq
Id
Iq
CURRENT COMPONENT DETECTOR
1
2
3
4
5
6
7
8
9
10
11
12
13
14
15
16

FIG. 2

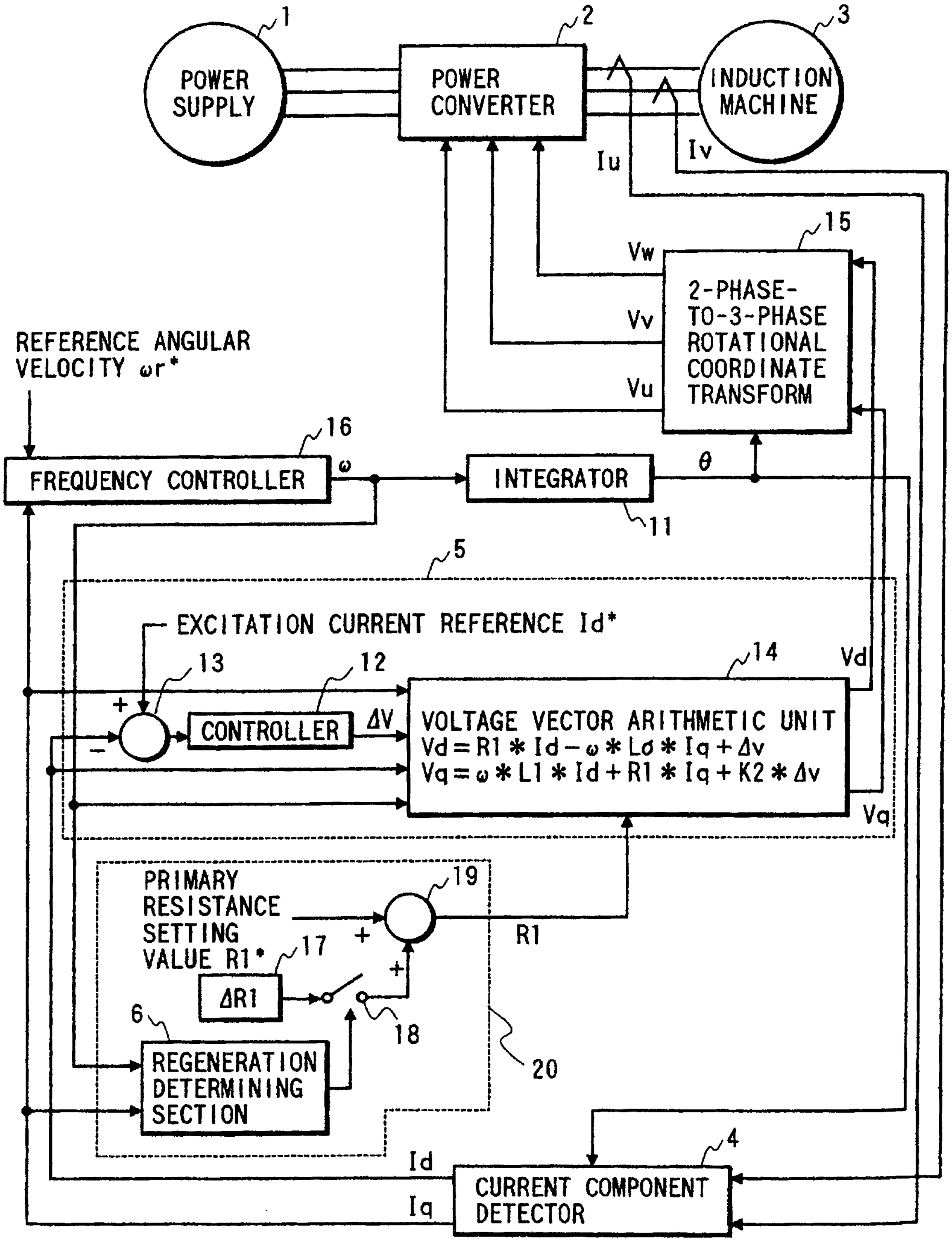
1
POWER SUPPLY
2
POWER CONVERTER
3
INDUCTION MACHINE
Iu
Iv
15
Vw
Vv
Vu
2-PHASE-TO-3-PHASE ROTATIONAL COORDINATE TRANSFORM
REFERENCE ANGULAR VELOCITY ωr*
16
FREQUENCY CONTROLLER
ω
INTEGRATOR
θ
11
5
EXCITATION CURRENT REFERENCE Id*
13
12
14
Vd
+
−
CONTROLLER
ΔV
VOLTAGE VECTOR ARITHMETIC UNIT
Vd = R1 * Id − ω * Lσ * Iq + Δv
Vq = ω * L1 * Id + R1 * Iq + K2 * Δv
Vq
PRIMARY RESISTANCE SETTING VALUE R1*
19
+
+
R1
17
ΔR1
18
6
REGENERATION DETERMINING SECTION
20
Id
Iq
4
CURRENT COMPONENT DETECTOR

FIG. 3

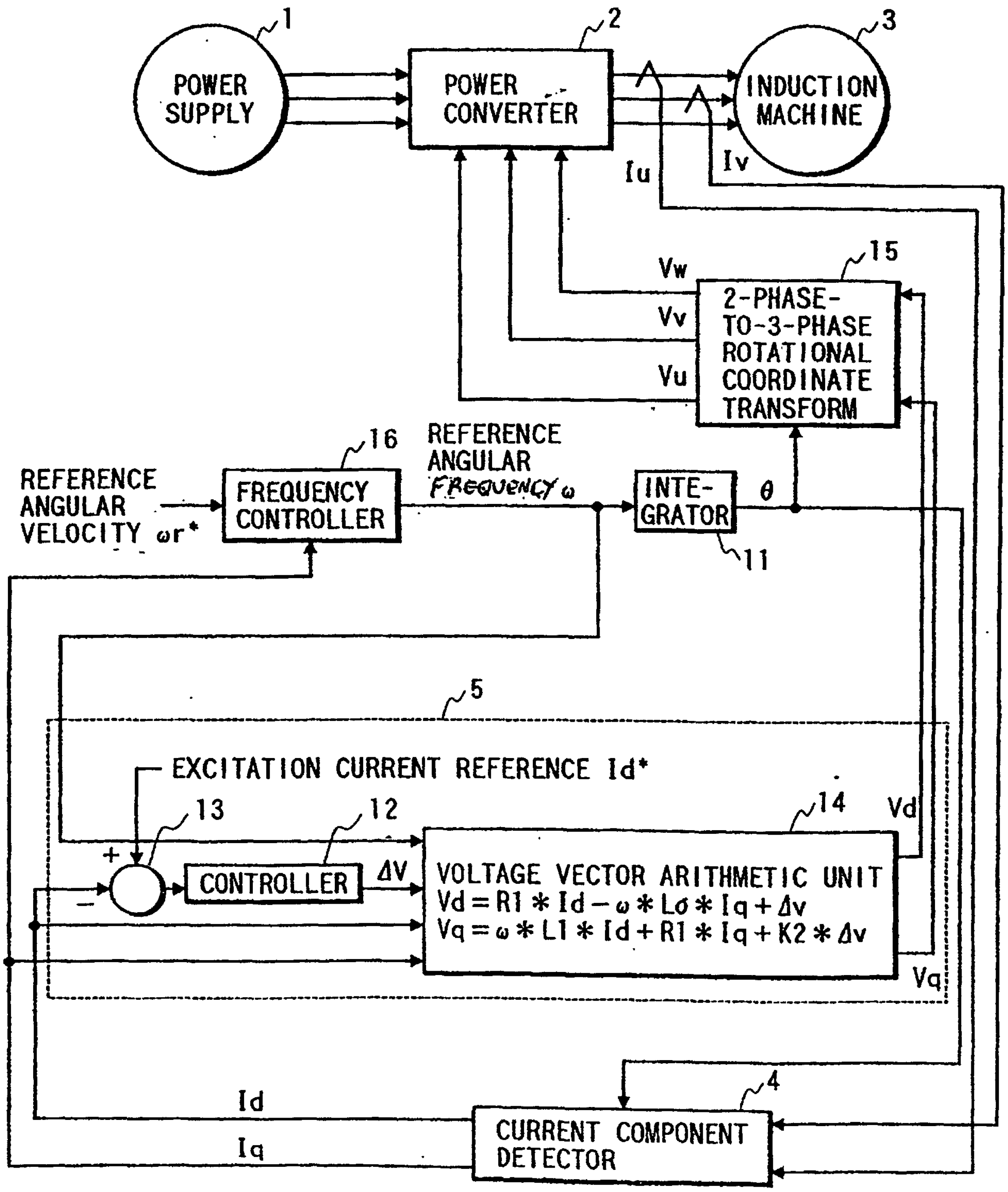
POWER SUPPLY
1
POWER CONVERTER
2
INDUCTION MACHINE
3
Iu
Iv
Vw
Vv
Vu
2-PHASE-TO-3-PHASE ROTATIONAL COORDINATE TRANSFORM
15
REFERENCE ANGULAR VELOCITY ωr*
FREQUENCY CONTROLLER
16
REFERENCE ANGULAR FREQUENCY ω
INTE-GRATOR
11
θ
5
EXCITATION CURRENT REFERENCE Id*
13
12
14
Vd
+
−
CONTROLLER
ΔV
VOLTAGE VECTOR ARITHMETIC UNIT
Vd = R1 * Id − ω * Lσ * Iq + Δv
Vq = ω * L1 * Id + R1 * Iq + K2 * Δv
Vq
Id
Iq
CURRENT COMPONENT DETECTOR
4

FIG. 4

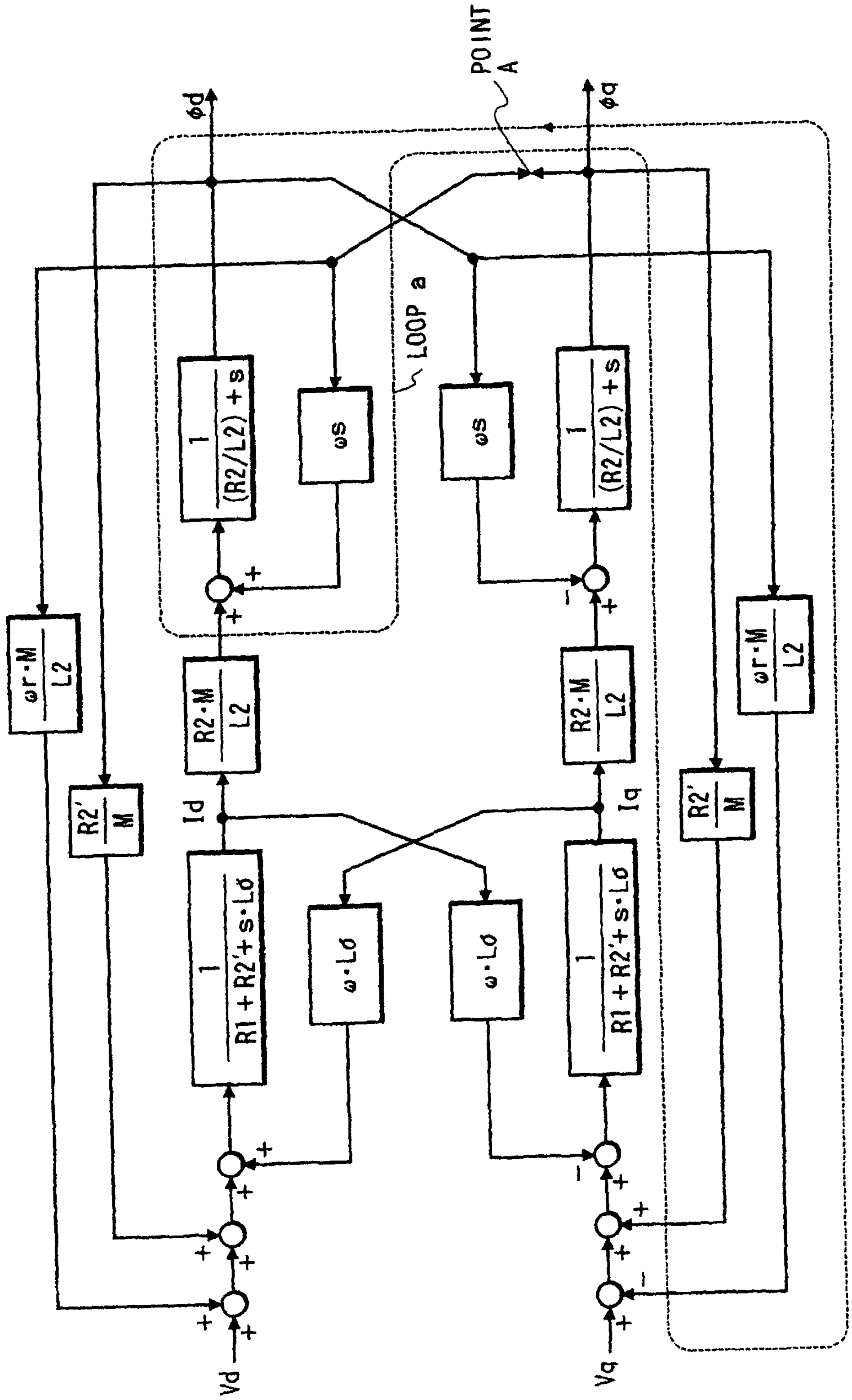

POINT A
LOOP a
φd
φq
Id
Iq
Vd
Vq
1 / ((R2/L2) + s)
ωs
R2·M / L2
ωr·M / L2
R2' / M
1 / (R1 + R2' + s·Lσ)
ω·Lσ

FIG. 5

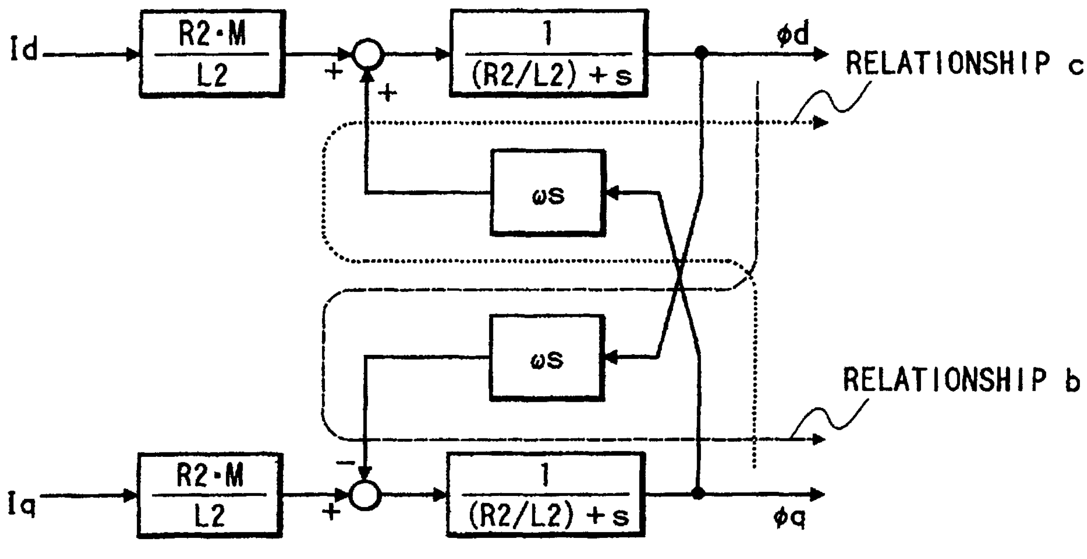
Id
R2·M
L2
+
+
1
(R2/L2) + s
φd
RELATIONSHIP c
ωs
ωs
RELATIONSHIP b
Iq
R2·M
L2
+
−
1
(R2/L2) + s
φq

FIG. 6

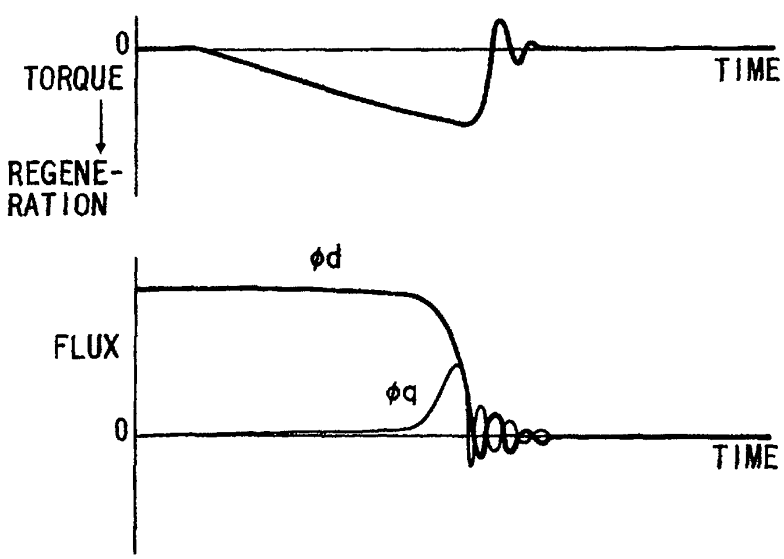
0
TORQUE
REGENE-
RATION
TIME
φd
FLUX
φq
0
TIME

FIG. 7

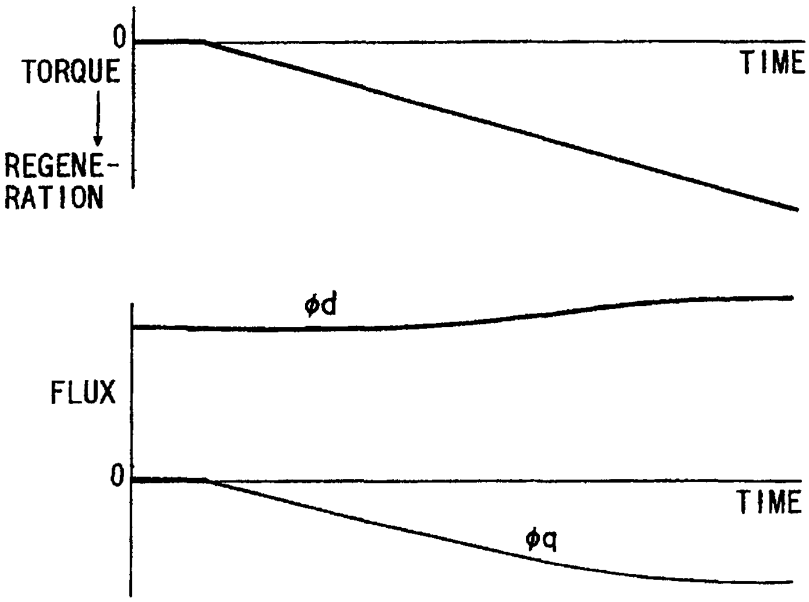
0
TORQUE
REGENE-
RATION
TIME
ϕd
FLUX
0
TIME
ϕq

FIG. 8

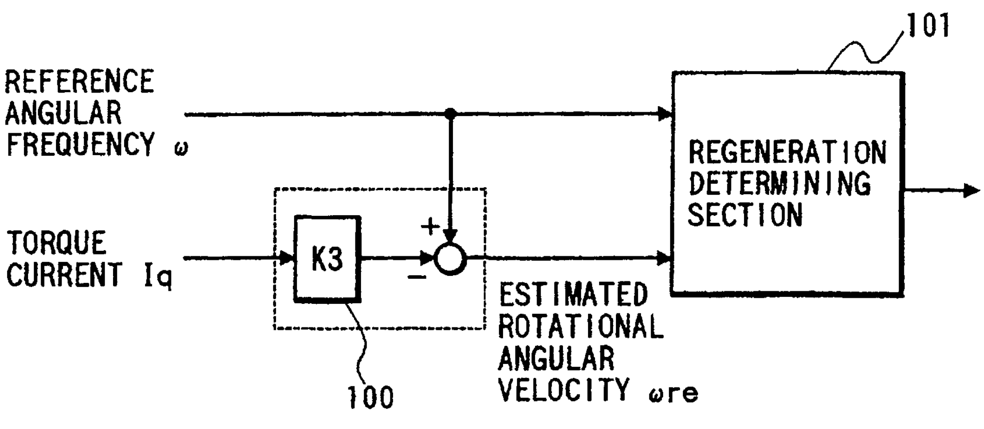
101
REFERENCE
ANGULAR
FREQUENCY ω
REGENERATION
DETERMINING
SECTION
TORQUE
CURRENT Iq
K3
+
−
ESTIMATED
ROTATIONAL
ANGULAR
VELOCITY ωre
100

FIG. 9

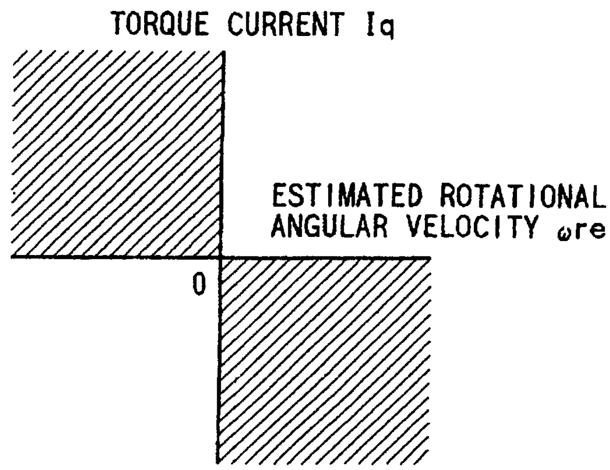
TORQUE CURRENT Iq
ESTIMATED ROTATIONAL
ANGULAR VELOCITY ωre
0

FIG. 10

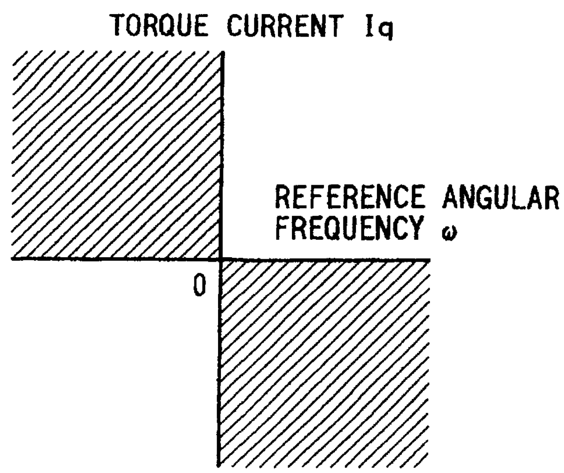
TORQUE CURRENT Iq
REFERENCE ANGULAR
FREQUENCY ω
0

FIG. 11

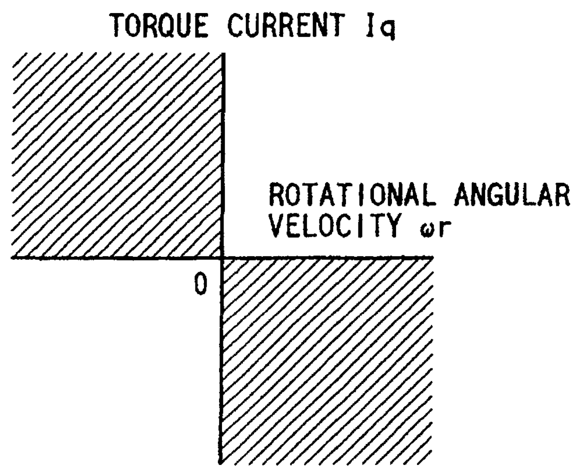
TORQUE CURRENT Iq
ROTATIONAL ANGULAR VELOCITY ωr
0

FIG. 12

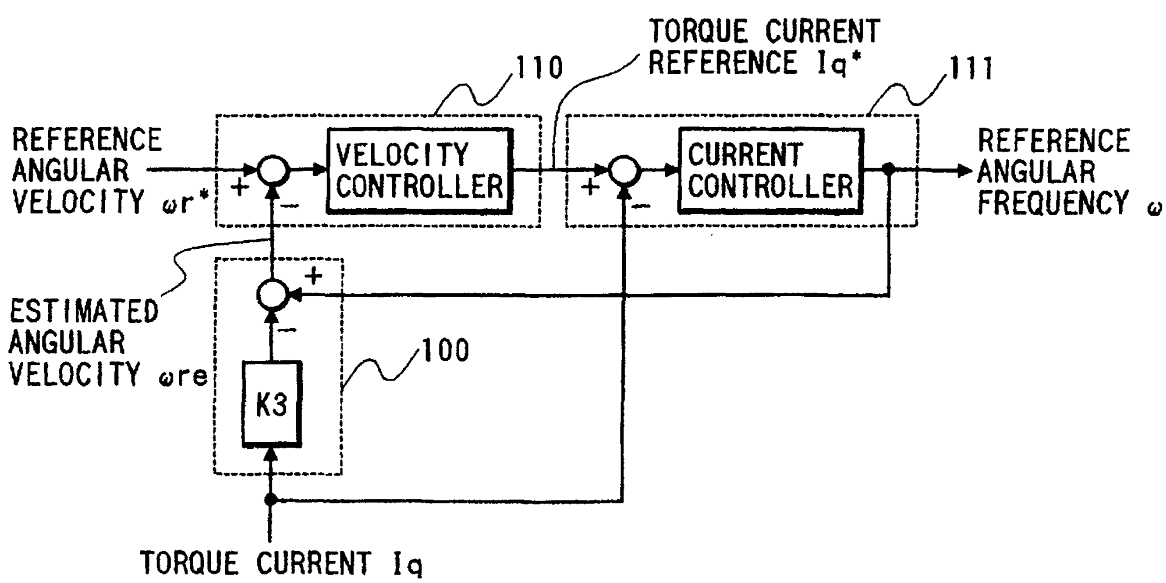
TORQUE CURRENT REFERENCE Iq*
110
111
REFERENCE ANGULAR VELOCITY ωr*
VELOCITY CONTROLLER
CURRENT CONTROLLER
REFERENCE ANGULAR FREQUENCY ω
ESTIMATED ANGULAR VELOCITY ωre
100
K3
TORQUE CURRENT Iq